# EUROPÄISCHE PATENTANMELDUNG

(11) **EP 2 865 540 A1**
(43) Veröffentlichungstag der Anmeldung: **29.04.2015**
(21) Anmeldenummer: 13190166.2
(22) Anmeldetag: 24.10.2013
(51) Int. Cl.: B60C 1/00, C08C 19/20, C08K 3/36, C08L 9/00

(54) **Kautschukzusammensetzung**

(71) Anmelder: LANXESS Deutschland GmbH, 50569 Köln (DE)
(72) Erfinder: Hardy, David, 2353 MS Leiderdorp (NL); Kloppenburg, Heike, 40625 Düsseldorf (DE); Lucassen, Alex, 7597 NE Saasveld (NL); Steinhauser, Norbert, 41539 Dormagen (DE); Zhang, Yan, 51375 Leverkusen (DE)

(57) **Zusammenfassung**

Die Erfindung betrifft vulkanisierbare Kautschukzusammensetzungen enthaltend mindestens folgende Komponenten:
a) mindestens ein funktionalisiertes Polymer,
b) mindestens ein modifiziertes Polybutadien mit einem Anteil an cis-1,4-Einheiten von > 95 Gew.-% und einem Anteil an 1,2-Vinyl-Gehalt von < 1 Gew.- %, wobei das Polybutadien nach der Polymerisation mittels Schwefelchloride modifiziert ist,
c) mindestens eine Kieselsäure,
d) mindestens einen weiteren Füllstoff,
e) mindestens ein Vulkanisationsmittel,
f) mindestens ein Öl,
g) ggf. mindestens einen Kautschukadditiv.

## Beschreibung

Die Erfindung betrifft vulkanisierbare Kautschukzusammensetzungen und hieraus hergestellte Vulkanisate, die sich für die Herstellung von Reifen, Reifenlaufflächen oder Reifenteilen eignen.

Bei Reifen oder Reifenlaufflächen werden als wichtige Eigenschaften eine gute Haftung auf trockener und nasser Oberfläche, ein geringer Rollwiderstand sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Laufleistung des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen unter anderem in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Zur Herstellung von Reifen bzw. Reifenlaufflächen mit verringertem Rollwiderstand werden üblicherweise Füllstoffe als Verstärkungsmittel, wie etwa polysulfidische Silane, Ruße oder Kieselsäure (Silica) eingesetzt. Nachteilig bei der Verwendung von funktionalisierten Lösungs-Styrol-Butadien-Kautschuken und Kieselsäure als Verstärkungsmittel zur Herstellung von Reifen, Reifenlaufflächen oder Reifenteilen ist jedoch, dass die Kautschukmischung aufgrund einer erhöhten Polymer-Füllstoff-Wechselwirkung und zugleich einer verringerten Füllstoff-Füllstoff-Wechselwirkung sehr elastisch wird, was für die Verarbeitbarkeit der Kautschukmischung während der Extrusion oder des Kalandrierens ein Problem darstellt. Insbesondere zeigt sich diese Auswirkung in der rauen Oberflächenstruktur der Vulkanisate. Dies hat zur Folge, dass im Fertigungsprozess die Gewichtskontrolle erschwert wird.

Zur Verbesserung der Verarbeitbarkeit von kieselsäurehaltigen Kautschukmischungen wurden beispielsweise Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, so dass die verstärkende Wirkung des Füllstoffes Einbuße erleidet. Eine zu geringe Härte oder Steifigkeit des Vulkanisats resultiert aber in unbefriedigendes Fahrverhalten des Reifens besonders in Kurven.

Es ist daher die Aufgabe der Erfindung, vulkanisierbare Kautschukzusammensetzungen bereitzustellen, die ein gutes Verarbeitungsverhalten bei der Herstellung von Reifen, Reifenlaufflächen oder Reifenteilen aufweisen, wobei die Reifen, Reifenlaufflächen oder Reifenteile keine Einbuße in ihrer dynamischen-mechanischen Eigenschaften, insbesondere im Hinblick auf Rollwiderstand, Nassrutschfestigkeit und/oder mechanische Festigkeit, erleiden.

Es wurde überraschend gefunden, dass dieses Ziel mit vulkanisierbaren Kautschukzusammensetzungen enthaltend mindestens folgende Komponenten:
a) mindestens ein funktionalisiertes Polymer,
b) mindestens ein modifiziertes Polybutadien mit einem Anteil an cis-1,4-Einheiten von > 95 Gew.-% und einem Anteil an 1,2-Vinyl-Gehalt von < 1 Gew.- %, wobei das Polybutadien nach der Polymerisation mittels Schwefelchloride modifiziert ist.
c) mindestens eine Kieselsäure,
d) mindestens einen weiteren Füllstoff,
e) mindestens ein Vulkanisationsmittel,
f) mindestens ein Öl,
g) ggf. mindestens einen Kautschukadditiv,
erreicht wird.

Es konnte festgestellt werden, dass durch den Zusatz von modifizierten Polybutadienen die Fließfähigkeit von Kautschukzusammensetzungen positiv beeinflussen und zu Vulkanisaten mit guten dynamischen Verhalten und deutlich erhöhter Härte/Steifigkeit führen, was bei der Verarbeitbarkeit von Reifen, Reifenlaufflächen oder Reifenteilen besonders wichtig ist.

Vorzugsweise handelt es sich bei dem funktionalisierten Polymer um funktionalisierte Dienpolymere oder durch Copolymerisation von Dienen mit vinylaromatischen Monomeren erhältliche Dien-Copolymer. Besonders bevorzugt ist das funktionalisierte Polymer ein Polybutadien, ein Polyisopren, ein Butadien-Isopren-Copolymer, ein Butadien-Styrol-Copolymer (SSBR), ein Isopren-Styrol-Copolymer oder ein Butadien-Isopren-Styrol-Terpolymer ist.

Unter SSBR versteht man Kautschuke, die in einem Lösungsprozess auf der Basis von Vinylaromaten und Dienen, bevorzugt konjugierten Dienen hergestellt werden (H. L. Hsieh, R. P. Quirk, Marcel Dekker Inc. New York-Basel 1996, S. 447-469; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Geeignete vinylaromatische Monomere sind Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew. %, bevorzugt im Bereich von 60 bis 90 Gew. %. Der Gehalt an Vinylgruppen im einpolymerisierten Dien liegt im Bereich von 10 bis 90 %, der Gehalt an 1,4-trans-ständigen Doppelbindungen liegt im Bereich von 10 bis 80 % und der Gehalt an 1,4-cis ständigen Doppelbindungen ist komplementär zur Summe aus Vinylgruppen und 1,4-trans-ständigen Doppelbindungen. Der Vinylgehalt des SSBR beträgt vorzugsweise > 10 %.

Üblicherweise sind die polymerisierten Monomeren und die unterschiedlichen Dien-Konfigurationen statistisch im Polymeren verteilt.

Die Herstellung dieser Vinylaromat/Dien-Kautschuke als Kautschukkomponente a) für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen Mooneyviskositäten (ML 1+4 bei 100°C) im Bereich von 20 bis 150 Mooneyeinheiten (ME), vorzugsweise im Bereich von 30 bis 100 Mooneyeinheiten. Insbesondere die hochmolekularen SSBR-Typen mit Mooney-Viskositäten von > 80 ME können Öle in Mengen von 30 bis 100 Gew.-Teile bezogen auf 100 Gew.-Teile Kautschuk enthalten. Ölfreie SSBR-Kautschuke weisen Glasübergangstemperaturen im Bereich von -70°C bis -10° C auf, bestimmt durch Differentialthermoanalyse (DSC).

SSBR kann sowohl linear als auch verzweigt oder endgruppenmodifiziert sein. Beispielsweise sind derartige Typen in DE 2 034 989 C2 und JP-A-56-104 906 genannt. Als Verzweigungsmittel wird bevorzugt Siliciumtetrachlorid oder Zinntetrachlorid eingesetzt.

Die Einführung funktioneller Gruppen an den Polymerkettenenden und/oder an den Polymerkettenanfängen ermöglicht eine physikalische oder chemische Anbindung dieser Polymerkettenenden bzw. -anfänge an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Gruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Zu diesem Zweck sind zahlreiche Methoden zur Endgruppenmodifizierung entwickelt worden. Beispielsweise wird in der EP0180141A1 die Verwendung von 4,4'-Bis(dimethyl-amino)benzophenon oder N-Methylcaprolactam als Funktionalisierungsreagenzien beschrieben. Auch die Verwendung von Ethylenoxid und N-Vinylpyrrolidon ist aus EP0864606A1 bekannt. Eine Reihe weiterer möglicher Funktionalisierungsreagenzien sind in US4417029 aufgeführt. Methoden zur Einführung von funktionellen Gruppen an den Polymerkettenanfängen mittels funktioneller anionischer Polymerisationsinitiatoren sind zum Beispiel in EP0513217A1 und EP0675140A1 (Initiatoren mit geschützter Hydroxylgruppe), US20080308204A1 (Thioether enthaltende Initiatoren) sowie in US5792820, EP0590490A1 und EP0594107A1 (Alkaliamide von sekundären Aminen als Polymerisationsinitiatoren) beschrieben.

Die Carboxygruppe als stark polarer, zweizähniger Ligand kann besonders gut mit der Oberfläche des Silikafüllstoffes in der Kautschukmischung wechselwirken. Methoden zur Einführung von Carboxygruppen entlang der Polymerkette von in Lösung hergestellten Dienkautschuken sind bekannt und beispielsweise beschrieben in DE2653144A1, EP1000971A1, EP1050545A1, WO2009034001A1.

Die Einführung von Carboxygruppen an den Kettenenden von Dienkautschuken ist ebenfalls beschrieben, so zum Beispiel in US3242129 oder US4465809 durch Umsetzung der anionischen Polymerkettenenden mit CO₂.

Insbesondere Silane und Cyclosiloxane mit in der Summe mindestens zwei Halogen- und/oder Alkoxy- und/oder Aryloxysubstituenten an Silicium eignen sich gut zur Endgruppenfunktionalisierung von Dienkautschuken, da einer der genannten Substituenten am Si-Atom leicht in einer schnellen Substitutionsreaktion durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US3244664, US4185042, EP0778311A1 und US20050203251A1.

WO2012/065908A1 beschreibt 1-Oxa-2-silacycloalkane als Funktionalisierungsreagenzien zur Einführung von Hydroxyendgruppen an Dienpolymeren. Diese 1-Oxa-2-silacycloalkane weisen die Nachteile der im vorigen Absatz beschriebenen Silane, wie Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung, nicht auf.

Alle aus dem Stand der Technik bekannten funktionalisierten Polymere können für die erfindungsgemäße Kautschukzusammensetzung eingesetzt werden.

Zum Einsatz kommen bevorzugt als funktionalisiertes Polymer ein durch Lösungspolymerisation hergestelltes endgruppenfunktionalisierte Butadien-Styrol-Copolymers (endgruppenfunktionalisierte SSBR) handelt. Vorzugsweise handelt es sich bei den funktionellen Gruppen um Hydroxyl- und/oder Carboxyl-, Siloxygruppen.

Vorzugsweise weist das endgruppenfunktionalisierte Butadien-Styrol-Copolymer für die erfindungsgemäße Kautschukzusammensetzung Mooney-Viskositäten (ML 1+4 (100°C)) von 10 bis 200, vorzugsweise 30 bis 150 Mooney-Einheiten und mittlere Molgewichte (Zahlenmittel, Mₙ) von 10.000 bis 2.000.000 g/mol, bevorzugt von 100.000 bis 1.000.000 g/mol auf.

Für die erfindungsgemäße vulkanisierbare Kautschukzusammensetzung weist das endgruppenfunktionalisierte Butadien-Styrol-Copolymer vorzugsweise Glasübergangstemperaturen von -110°C bis +20°C, bevorzugt -110°C bis 0°C auf.

Polybutadiene werden als wichtige Bestandteile von Kautschukmischungen in der Reifenindustrie eingesetzt, wobei eine Verbesserung der Endeigenschaften, wie etwa eine Reduktion des Rollwiderstandes und des Abriebes gewünscht wird. Ein weiteres Anwendungsfeld sind Golfballkerne oder Schuhsohlen, wobei hier eine hohe Rückprallelastizität im Vordergrund steht. Polybutadiene mit einem hohen Anteil an cis-1,4-Einheiten werden seit längerer Zeit in großem technischen Maßstab produziert und für die Herstellung von Reifen und anderen Gummiwaren sowie zur Schlagzähmodifizierung von Polystyrol eingesetzt.

Zur Erzielung hoher Anteile an cis-1,4-Einheiten werden derzeit fast ausschließlich Katalysatoren auf Basis von Verbindungen der Seltenen Erden eingesetzt, wie beispielsweise in EP-A 1 0 011 184 und EP-B-A1 0 007 027 beschrieben.

Aus dem Stand der Technik ist bekannt, dass speziell Neodym-katalysierte Polybutadiene in der Gruppe der hoch-cis-Polybutadiene besonders vorteilhafte Eigenschaften hinsichtlich Rollwiderstand, Abrieb und Rückprallelastizität aufweisen. Bei der Herstellung von Polybutadienen spielen die eingesetzten Katalysatorsysteme eine wichtige Rolle.

Der technisch eingesetzte Neodymkatalysator beispielsweise ist ein Ziegler/Natta-System, das aus mehreren Katalysatorkomponenten gebildet wird. Bei der Katalysatorbildung werden meist unterschiedliche Katalysatorzentren gebildet, die sich im Polymer anhand einer mindestens bimodalen Molmassenverteilung erkennen lassen. Im Ziegler/Natta-Katalysatorsystem werden die bekannten 3 Katalysatorkomponenten, meist bestehend aus einer Neodymquelle, einer Chloridquelle und einer Aluminiumorganischen Verbindung in verschiedenster Art und Weise unter bestimmten Temperaturbedingungen vermischt, wobei das Katalysatorsystem mit oder ohne Alterung für die Polymerisation vorbereitet wird.

Aus dem Stand der Technik sind mehrere Herstellungsverfahren für Ziegler/Natta-Katalysatorsysteme bekannt, welche zur Herstellung von Polybutadienen eingesetzt werden.

Die EP 0 127 236 beschreibt beispielsweise ein Verfahren, in der der Katalysator durch die Vermischung von Neodymoxiden, Neodymalkoholaten und Carboxylaten mit einem Organometallhalogeniden sowie einer organischen Verbindung bei einer Temperatur von 20°C bis 25°C hergestellt wird. Es ist auch möglich, die Vermischung dieser 4 Komponenten bei 50°C bis 80°C durchzuführen. Bei dieser Variante wird die Mischung auf 20 bis 25°C abgekühlt, sodann wird DIBAH zugefügt.

Aus EP 1 176 157 B1 ist ein Verfahren zur Herstellung von Polybutadienen mit verringertem Verhältnis Lösungsviskosität/Mooney-Viskosität bekannt, in dem die Katalysatorenherstellung mit Präformierung durchgeführt wird. Dabei wird zunächst das Neodymversatat mit DIBAH und Isopren bei 50°C vermischt, anschließend wird diese Mischung auf 5°C abgekühlt, danach wird Ethylaluminiumsesquichlorid (EASC) zugegeben. Die Alterung kann mehrere Minuten bis mehrere Tage dauern bei einer Temperatur zwischen 10°C und -80°C. Während der Polymerisation werden Comonomere, wie beispielsweise ein Bisdien, hinzugefügt, um den Verzweigungsgrad des Polymers zu erhöhen und somit auch das sehr enge Verhältnis Lösungsviskosität / Mooney-Viskosität zu erhalten. Das dabei erhaltene verzweigte Polymer hat pro Molekül durch die Kopplung über das Bisdien mindestens 4 freie Kettenenden, während lineare Moleküle nur 2 Kettenenden besitzen.

Die Anzahl der Kettenenden im Polymer ist für die Energiedissipation verantwortlich. Je höher die Anzahl an freien Kettenenden, desto höher ist die Energiedissipation durch das Polymer. Je geringer jedoch die Energiedissipation des Polymers ist, desto geringer ist beispielsweise der Rollwiderstand und desto besser ist die Rückprallelastizität des Polymers. Dementsprechend sind die Endeigenschaften eines linearen Polymers mit nur 2 Kettenenden pro Molekül immer besser als die eines verzweigten Polymers bei gleicher Molmasse.

Bevorzugt werden Ziegler-Natta-Katalysatoren auf Basis von Verbindungen der Seltenen Erdmetalle eingesetzt, wie Cer-, Lanthan-, Praseodym-, Gadolinium- oder Neodymverbindungen, die in Kohlenwasserstoffen löslich sind. Besonders bevorzugt werden die entsprechenden Salze der Seltenen Erdmetalle als Ziegler-Natta-Katalysatoren eingesetzt, wie Neodymphosphonate, Neodymcarboxylate, insbesondere Neodymneodecanoat, Neodymoctanoat, Neodymnaphthenat, Neodym-2,2-diethyl-hexanoat oder Neodym-2,2-diethyl-heptanoat, sowie die entsprechenden Salze des Lanthans oder Praseodyms. Weiterhin umfassen die einsetzbaren Ziegler-Natta-Katalysatoren auch Katalysatorsysteme auf Basis von Metallocenen, wie z.B. beschrieben in EP-A 1025136 und EP-A 1078939.

Es ist bekannt, dass kommerziell hergestellte Polymere eine statistische Molmassenverteilung besitzen, wobei die Breite der Molmassenverteilung durch die Katalysatorherstellung beeinflusst wird.

Dies gestattet zunächst die Erzeugung von niedermolekularen Basispolymeren, was den großen Vorteil hat, bei den üblicherweise angewandten Lösungspolymerisationstechniken niedrigere Viskositäten im "cement" (Lösung des Polymeren in dem organischen Lösungsmittelmedium, das bei der Polymerisation verwendet wird) zu bringen und einen Betrieb mit höheren Feststoffgehalten im "cement" erlaubt, da ein besserer Wärmetransport erreicht wird. Auch kann der Coldflow derartiger Dienpolymeren vermindert werden, so dass sie stärker mit Öl verstreckt werden können.

Es ist weiterhin bekannt, dass man Polydiene mit niedrigem cold-flow herstellen kann, wenn man die Dienpolymere nach der Polymerisation mit Dischwefeldichlorid, Schwefeldichlorid, Thionylchlorid, Dischwefeldibromid oder Thionylbromid behandelt (DE-AS 12 60 794).

Die DE 44 36 059 A1 beschreibt ebenfalls ein Verfahren zur sprungartigen Erhöhung des Molekulargewichts von Nd-katalysierten Dienkautschuken, wobei der Eigengeruch des Polymers durch einen Entspannungsschritt nach der Polymerisation durchgeführt wird, um alle niedrigsiedende Bestandteile des Reaktionsgemisches zu entfernen.

Es können alle aus dem Stand der Technik bekannten Polybutadiene für die erfindungsgemäße Kautschukzusammensetzung eingesetzt werden, sofern deren Mooney-Viskosität (ML 1+4 bei 100 °C) nach der Polymerisation durch Modifizierung nochmal erhöht wurden. Derartige Modifizierungen sind auch dem Fachmann unter den Bezeichnungen "sprungartige Erhöhung der Mooney-Viskosität", "Mooney gesprungen", "Mooney-Sprung" oder "Mooney-Jump" bekannt.

Die Bezeichnung "sprungartige Erhöhung der Mooney-Viskosität" und ihre Abwandlungen, wie etwa "Mooney gesprungen", "Mooney-Sprung" oder "Mooney-Jump", beziehen sich auf Techniken, nach denen die Mooney-Viskosität (ML 1+4 bei 100 °C) der Polymere nach der Polymerisation bedeutend erhöht wird bzw. der Verzweigungsgrad erhöht wird. Üblicherweise wird das Polymerisat mit S₂Cl₂ modifiziert, um gemäß folgender schematischer Reaktionsgleichung das Polymer über Schwefelbrückenbindung zu verzweigen:

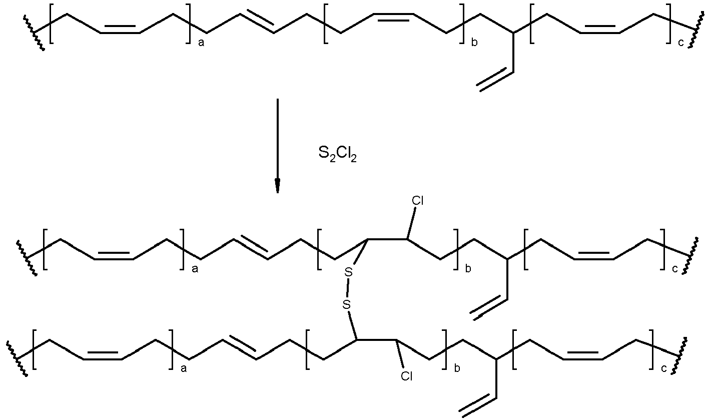

Der Verzweigungsgrad bzw. die Mooney-Viskosität (ML 1+4 bei 100 °C) wird somit erhöht. Das oben gezeigte Reaktionsschema beschreibt den "Mooney-Sprung" beispielhaft für ein hoch-cis-Polybutadien, wobei diese Reaktion auch an allen anderen dienhaltigen Polymeren durchgeführt werden kann.

Zur Klarstellung der Begrifflichkeiten werden verstanden:
- Ausgangsmooney-Viskosität:: Mooney-Viskosität (ML 1+4 100°C) nach der Polymerisation des Polymers.
- Endmooney-Viskosität:: Mooney-Viskosität (ML 1+4 100°C) nach der Modifizierung bzw. Mooney-Sprung oder Sprung-Reaktion des Polymers (Sprung-Polymer).
- Sprung-Polymer:: Polybutadien nach der Modifizierung, nach dem Mooney-Sprung oder nach der Sprung-Reaktion

Vorzugsweise wird das modifizierte Polybutadien durch Lösungspolymerisation in Gegenwart mindestens eines inerten, organischen Lösungsmittels und in Gegenwart von mindestens einem Katalysator auf Basis von Neodymverbindungen in einem Temperaturbereich von -20°C bis 150°C polymerisiert, die Polymerisation durch Zugabe von protischen Verbindungen gestoppt und das Polymerisat mittels Schwefelchloriden modifiziert.

Vorzugsweise werden die Schwefelchloride vor der Zugabe mit einer Carbonsäure, Fettsäure und/oder Fettsäureester behandelt.

Bevorzugt handelt es sich bei den Schwefelchloriden um Dischwefeldichlorid, Schwefelchlorid, Schwefelbromid, Schwefeldichlorid, Thionylchlorid, Dischwefeldibromid und/oder Thionylbromid.

Besonders bevorzugt für die vulkanisierbare Kautschukzusammensetzung weist das modifizierte Polybutadien eine sprungartige Erhöhung der Mooney-Viskosität (ML 1+4 bei 100 °C) um mindestens 50%, bezogen auf die Mooney-Viskosität (ML 1+4 bei 100 °C) des Polybutadiens nach Zugabe der Schwefelchloride, auf.

Vorzugsweise weist das modifizierte Polybutadien nach der Polymerisation eine Mooney-Viskosität (ML 1+4 bei 100 °C) (Ausgangsmooney-Viskosität) von mindestens 20 MU, bevorzugt 20 - 25 MU, besonders bevorzugt mindestens 40 MU auf und nach der Zugabe von Schwefelchloriden eine Mooney-Viskosität (ML 1+4 bei 100 °C) (Endmooney-Viskosität) von mindestens 30 MU, bevorzugt 40 - 50 MU, besonders bevorzugt 60 -80 MU auf, wobei der Gelgehalt kleiner als 1 Gew.-% beträgt.

Vorzugsweise werden für die erfindungsgemäße vulkanisierbare Kautschukzusammensetzung hochmolekulare Neodymium-katalysierte Polybutadiene (NdBR) mit einem Anteil an cis-1,4-Einheiten von > 95 Gew.-% und einem Anteil an 1,2-Vinyl-Gehalt von < 1 Gew.- % eingesetzt, wobei die NdBR derart modifiziert sind, dass deren Mooney-Viskosität (ML 1+4 bei 100 °C) nach der Polymerisation erhöht wurden.

Bevorzugt wird NdBR nach der Polymerisation mit Schwefelchloriden modifiziert.

Eine vorzugsweise Ausführung für die erfindungsgemäße vulkanisierbare Kautschukzusammensetzung weist:
a) 50 bis 90 Gew.-Teile, vorzugsweise 60 bis 70 Gew.-Teile von mindestens einem funktionalisierten Lösungs-Butadien-Styrol- Copolymer (SSBR) (ölfrei) mit einer Glasübergangstemperatur (Tg) zwischen -110°C bis +20°C bezogen auf das ölfreie SSBR,
b) 10 - 50 Gew.-Teile, vorzugsweise 20 bis 40 Gew.-Teile von mindestens einem modifizierten Neodymkatalysierten Polybutadien (NdBR) mit einer Mooneyviskosität (ML 1+4 bei 100 °C) von mindestens 30 MU,
c) 50 - 120 Gew.-Teile, vorzugsweise 60 - 100 Gew.-Teile von mindestens einer Kieselsäure,
d) 2 - 25 Gew.-Teile, vorzugsweise 5 - 10 Gew.-Teile von mindestens einem weiteren Füllstoff,
e) 1 - 5 Gew.-Teile, vorzugsweise 2 - 4 Gew.-Teile von mindestens einem Vulkanisationsmittel,
f) 5 - 50 Gew.-Teile, vorzugsweise 10 - 40 Gew.-Teile von mindestens einem Öl,
g) Ggf. 1 - 7 Gew.-Teile, vorzugsweise 2 - 5 Gew.-Teile von mindestens einem Kautschukadditiv,
bezogen auf 100 Gewichtsteile Gesamtkautschuk (Summe aus a) und b)), auf.

Die Glasübergangstemperaturen der Kautschuke werden mittels DSC (Differential Scanning Calorimetry) nach DIN EN ISO 11357-1 und DIN EN 61006 bestimmt. Die Temperaturkalibrierung erfolgt mittels der Onsettemperaturen des fest-flüssig Übergangs (Abweichungen von der Anfangsbasislinie und der ansteigenden Schmelzkurve) von Indium (156,6°C) und von Blei (328°C). Vor Beginn des 1. Aufheizzyklus wird die Probe mit flüssigem Stickstoff mit einer Abkühlgeschwindigkeit von 320K/min auf -130°C abgekühlt. Die anschließende Aufheizung erfolgt unter Spülung mit Stickstoffgas bei einer Heizrate von 20K/min bis zu einer Temperatur von 150°C. Danach wird die Probe mit flüssigem Stickstoff auf -130°C abgekühlt und mit 20K/min erwärmt. Für die Auswertung wird das Thermogramm der 2. Aufheizung herangezogen. Die Auswertung erfolgt grafisch durch Anlegen von drei Geraden (siehe Abb. 1). Die Glasübergangstemperatur Tg wird als Mittelpunktstemperatur der Schnittpunkte Y und Z erhalten.

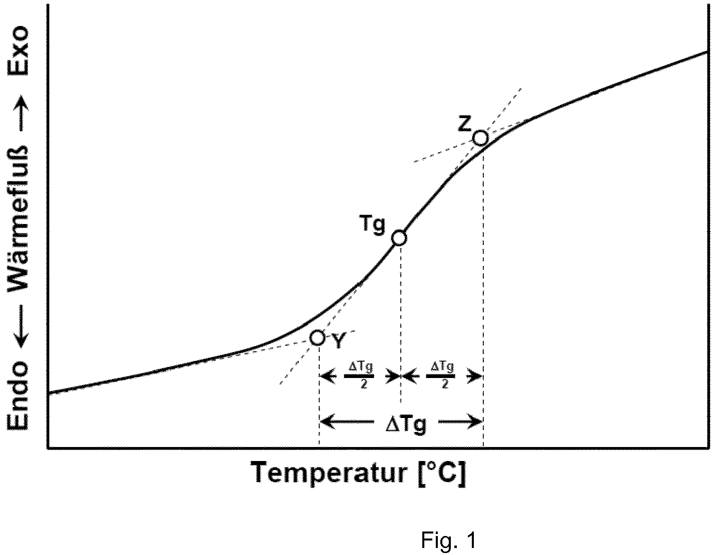

Für die Bestimmung der Glasübergangstemperatur ölverstreckter Kautschuke muss das Öl aus dem Kautschuk entfernt werden. Die Ölentfernung kann durch erschöpfende Extraktion mit Methanol in einem Soxhlet-Extraktor erfolgen, wobei vor der Bestimmung der Glasübergangstemperatur das anhaftende Aceton unter Vakuum bis zur Gewichtskonstanz entfernt wird. Alternativ kann das Öl auch durch Umfällung einer toluolischen Kautschuklösung mit Hilfe von Methanol entfernt werden. Hiefür wird der ölverstreckte Kautschuk kleingeschnitten und bei Raumtemperatur unter Rühren in Toluol gelöst (1 g Kautschuk gelöst in 50 g Toluol). Danach wird die toluolische Kautschuklösung langsam in 500 g Methanol unter Rühren bei Raumtemperatur eingetropft. Der koagulierte Kautschuk wird isoliert, das anhaftende Lösungsmittel mechanisch abgepresst und anschließend im Vakuum bis zur Gewichtskonstanz getrocknet.

Erfindungsgemäß können ein oder mehrere helle verstärkende Füllstoffe als Komponente c) verwendet werden. "Hell" im Sinne der Erfindung schließt insbesondere Ruß aus. Bei dem verstärkenden hellen Füllstoff handelt es sich vorzugsweise um Kieselsäure (SiO₂) oder Aluminiumoxid (Al₂O₃) oder Gemischen davon.

Wird Kieselsäure oder "Silica" (Ullmann's Encyclopedia of Industrial Chemistry, VCH Verlagsgesellschaft mbH, D-69451 Weinheim, 1993, "Silica", S.635-647) verwendet, so handelt es sich um pyrogene (ibid. S. 635-647) oder um Fällungskieselsäure (ibid. 642-647). Fällungskieselsäuren werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt sind Fällungskieselsäuren mit spezifischen Oberflächen von 5 bis 1000 m²/g, vorzugsweise von 20 bis 400 m²/g, jeweils bestimmt nach BET. Für die Herstellung von Reifenlaufflächen mit geringem Rollwiderstand sind hochdispergierbare Fällungskieselsäuren bevorzugt. Beispiele für bevorzugte hochdispergierbare Kieselsäuren schließen beispielsweise ein: Perkasil® KS 430 (AKZO), BV 3380 und Ultrasil®7000 (Evonik-Degussa), Zeosil® 1165, MP 1115 MP und HRS 1200 MP (Rhodia), Hi-Si1 2000 (PPG), Zeopol® 8715, 8741 oder 8745 (Huber), Vulkasil® S, N und C von Lanxess und behandelte Fällungskieselsäuren wie beispielsweise mit Aluminium "dotierte" Kieselsäuren, die in der EP-A-0 735 088 beschrieben sind. Ein oder mehrere Kieselsäuretypen können verwendet werden.

Aluminiumoxid kann ebenfalls eingesetzt werden, beispielsweise als hochdispergierbares Aluminiumoxid wie in der EP-A-0 810 258 beschrieben. Beispiele schließen ein: Al25 oder CR125 (Baikowski), APA- 1OORDX (Condea), Aluminiumoxid C (Degussa) und AKP-GO 15 (Sumitomo Chemicals).

Der helle verstärkende Füllstoff kann in Form von Pulvern, Mikroperlen, Granulaten oder Kugeln vorliegen. In einer bevorzugten Ausführungsform werden Kieselsäuren und/oder Aluminiumoxide verwendet. Besonders bevorzugt sind Kieselsäuren, insbesondere Fällungskieselsäuren.

Der Gesamtgehalt an hydroxylgruppenhaltigem oxidischen Füllstoff liegt üblicherweise im Bereich von 50 bis zu 120 Gew.-Teilen, vorzugsweise im Bereich von 60 bis 100 Gew.-Teilen, und besonders bevorzugt 25 bis 90 Gew.-Teilen bezogen auf 100 Gew.-Teile ölfreier Gesamtkautschuke (Summe aus a) und b)).

Bei den erfindungsgemäß eingesetzten polysulfidhaltigen Alkoxysilanen handelt es sich um sogenannte Kupplungsmittel zur Dispergierung und Einbindung des verstärkenden Füllstoffs in die Elastomermatrix. Diese tragen, wie dem Fachmann bekannt, zwei Arten von funktionellen Gruppen, die Alkoxysilylgruppe, die an den hellen Füllstoff bindet, und die schwefelhaltige Gruppe, die an das Elastomer bindet. Erfindungsgemäß können ein oder mehrere der polysulfidhaltigen Alkoxysilane in Kombination verwendet werden.

Als polysulfidhaltige Alkoxysilane sind solche der nachfolgenden Formeln (I) und (II) besonders geeignet, ohne dass die nachfolgenden Definitionen einschränkend zu verstehen sind. Bei denjenigen der Formel (I) handelt es sich um solche, die zu beiden Seiten des zentralen Schwefels eine entsprechend substituierte Silylgruppe tragen, während dies in der Formel (II) nur an einer Seite der Fall ist.

Einsetzbar sind somit polysulfidhaltige Alkoxysilane der allgemeinen Formel (I) oder (II) 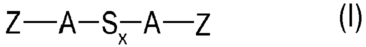 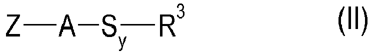 worin
- x: eine ganze Zahl von 2 bis 8 darstellt,
- y: eine ganze Zahl von 1 bis 8 darstellt,
- A: gleich oder verschieden sind und eine zweiwertige Kohlenwasserstoffgruppe ("Spacer") darstellen
- Z: gleich oder verschieden sind und eine der nachfolgend angegebenen Formeln besitzen 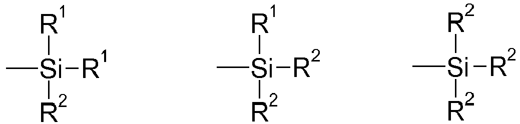
worin
- R¹: gleich oder verschieden, substituiert oder unsubstituiert sein können und eine C₁-C₁₈ Alkylgruppe, eine C₅-C₁₈ Cycloalkylgruppe oder C₆-C₁₈ Arylgruppe darstellen und
- R²: gleich oder verschieden, substituiert oder unsubstituiert sein können und eine C₁-C₁₈ Alkoxygruppe, eine C₅-C₁₈ Cycloalkoxygruppe oder C₆-C₁₈ Aryloxygruppe darstellen,
und
- R³: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest mit nachfolgenden Strukturen bedeutet 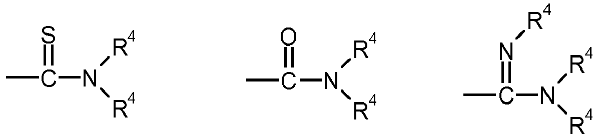 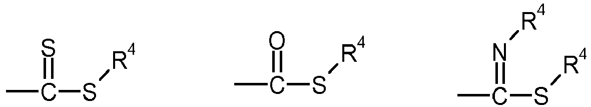 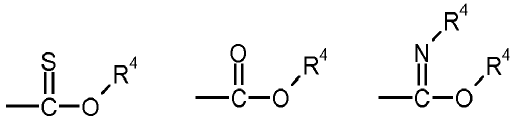 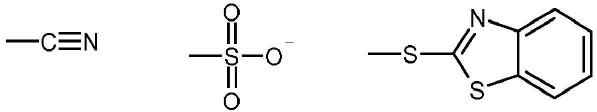 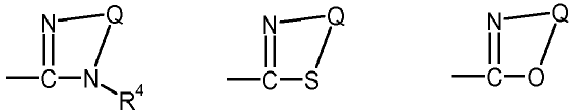
worin R⁴ für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht

In den polysulfidhaltigen Alkoxysilanen der allgemeinen Formel (I) ist die Zahl x vorzugsweise eine ganze Zahl von 2 bis 5. Im Falle eines Gemisches von polysulfidhaltigen Alkoxysilanen der oben angegebenen Formel (I), und insbesondere im Falle von üblichen, im Handel erhältlichen Gemischen, "x" ein Mittelwert, der vorzugsweise im Bereich von 2 bis 5 liegt und insbesondere in der Nähe von 2 oder 4. Die Erfindung kann vorteilhaft mit Alkoxysilansulfiden mit x=2 und x=4 durchgeführt werden.

In den polysulfidhaltigen Alkoxysilanen der allgemeinen Formeln (I) und (II) sind die substituierten oder unsubstituierten Gruppen A gleich oder verschieden und stehen vorzugsweise für eine zweiwertige aliphatische, heteroaliphatische, aromatische oder heteroaromatische Kohlenwasserstoffgruppe, die gesättigt oder ein- oder mehrfach ungesättigt ist und 1 bis 20, bevorzugt 1 bis 18 Kohlenstoffatome sowie optional 1 bis 3 Heteroatome, insbesondere Sauerstoff, Schwefel oder Stickstoff, aufweist. Als Gruppe A sind insbesondere C₁-C₁₈ Alkylengruppen oder C₆-C₁₂ Arylengruppen geeignet, besonders bevorzugt sind C₁-C₁₀ Alkylengruppen, insbesondere C₂-C₄ Alkylengruppen und ganz besonders bevorzugt Propylen.

In den polysulfidhaltigen Alkoxysilanen der allgemeinen Formeln (I) und (II) sind R¹ gleich oder verschieden und bedeuten vorzugsweise C₁-C₆ Alkyl, Cyclohexyl oder Phenyl, besonders bevorzugt C₁-C₄ Alkyl und insbesondere Methyl und/oder Ethyl.

In den polysulfidhaltigen Alkoxysilanen der allgemeinen Formeln (I) und (II) sind R² gleich oder verschieden und bedeuten vorzugsweise C₁-C₁₀-Alkoxy, besonders bevorzugt C₁-C₈-Alkoxy, insbesondere Methoxy und/oder Ethoxy, C₅-C₈ Cycloalkoxy, besonders bevorzugt Cyclohexyloxy, oder C₆-C₁₄ Aryloxy, besonders bevorzugt Phenoxy.

Diese sogenannten "symmetrischen" polysulfidhaltigen Alkoxysilane sowie verschiedene Verfahren zu ihrer Herstellung sind z.B. in US-A-5,684,171 und US-A-5,684,172 beschrieben, die für x im Bereich von 2 bis 8 eine detaillierte Liste von bekannten Verbindungen angeben.

Das erfindungsgemäß verwendete polysulfidhaltige Alkoxysilan ist vorzugweise ein Polysulfid, insbesondere ein Disulfid oder ein Tetrasulfid von Bis(C₁-C₄)trialkoxysilylpropyl, noch bevorzugter Bis(C₁-C₄)trialkoxysilylpropyl und insbesondere Bis(2-ethoxysilylpropyl) oder Bis(3-trimethoxysilylpropyl) oder Bis(triethoxysilylpropyl). Das Disulfid von Bis(triethoxysilylpropyl) oder TESPD der Formel [(C₂H₅O)₃Si(CH₂)₃S]₂ ist z.B. von Evonik Degussa unter den Bezeichnungen Si266 oder Si75 (im zweiten Fall in Form eines Gemisches von Disulfid und Polysulfid) oder auch von der Firma Witco unter der Bezeichnung Silquest A 1589 im Handel erhältlich. Das Tetrasulfid von Bis(triethoxysilylpropyl) oder TESPT der Formel [(C₂H₅O)₃Si(CH₂)₃S₂]₂ ist z.B. von Evonik Degussa unter der Bezeichnung SI 69 (oder X-50S mit 50 Gew.% Russ als Träger) oder von der Firma Witco unter der Bezeichnung Silquest A 1289 (wobei es sich in beiden Fällen um ein kommerzielles Gemisch von Polysulfid mit einem Mittelwert für x in der Nähe von 4 handelt) erhältlich.

Die polysulfidhaltigen Alkoxysilane werden in den erfindungsgemäßen Kautschukmischungen zweckmäßigerweise mit 6 bis 12 Gew.-%, bevorzugt 1 bis 10 Gew.-%, bezogen auf 100 Gew.-% Kieselsäure, eingesetzt.

Erfindungsgemäß können ein oder mehrere Vulkanisationsmittel und/oder Vulkanisationshilfsmittel eingesetzt werden. Nachfolgend werden einige Beispiele genannt.

Zur Vernetzung der erfindungsgemäßen Kautschukzusammensetzung eignet sich entweder Schwefel in Form elementaren Schwefels oder in der Form eines Schwefelspenders. Elementarer Schwefel wird als löslicher oder unlöslicher Schwefel eingesetzt.

Unter löslichem Schwefel versteht man die bei gewöhnlichen Temperaturen einzige stabile Form, den gelben Cyclooctaschwefel (S₈) oder α-S, die aus typischen rhombischen Kristallen besteht und in Schwefelkohlenstoff hoch löslich ist. So lösen sich bei 25°C in 100g CS₂ 30g α-S (Stichwort "Schwefel" des online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 bis 95 % in Schwefelkohlenstoff unlöslich.

Beispiele für Schwefelspender sind Caprolactamdisulfid (CLD), Dithiomorpholin (DTDM) oder 2-(4-Morpholinodithio)benzothiazol (MBSS) (W. Hoffmann "Kautschuktechnologie", S. 254 ff, Gentner Verlag Stuttgart (1980).

Schwefel und/oder Schwefelspender werden in der erfindungsgemäßen Kautschukmischung in einer Menge im Bereich von 0,1 bis 15 Gew.-Teilen, bevorzugt 0,1-10 Gew.-Teilen, bezogen auf 100 Gew.-Teile ölfreier Gesamtkautschuk eingesetzt.

In der erfindungsgemäßen Kautschukmischung können ferner auch noch einer oder mehrere Vulkanisationsbeschleuniger zum Einsatz kommen, die für die Schwefelvulkanisation geeignet-sind.

Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Im Rahmen der vorliegenden Erfindung können solche Vulkanisationsbeschleuniger z.B. ausgewählt werden aus der Gruppe der Xanthogenate, Dithiocarbamate, Tetramethylthiuram-disulfide, Thiurame, Thiazole, Thioharnstoff-Derivate, Amin-Derivate wie Tetramine, Sulfenimide, Piperazine, Amincarbamate, Sulfenamide, Bisphenol- und Triazin-Derivate sowie Polythiophosphorverbindungen der allgemeinen Formel (III) oder (IV). 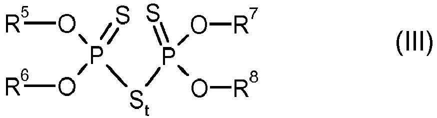 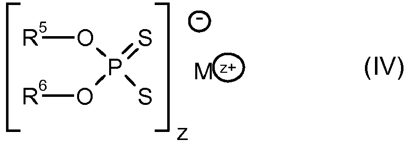 worin
- R⁵, R⁶, R⁷ und R⁸: gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
- t: für eine ganze Zahl von 1 bis 8, bevorzugt 3 bis 6 steht,
- z: für eine ganze Zahl von 1 bis 3, bevorzugt 1 bis 2 steht, und
- M^{z+}: ein Metallkation mit der Ladung z+ bedeutet, wobei z+ für 1 bis 3, bevorzugt 1 und 2 steht, oder ein Kation der Formel N(R⁹)₄⁺ bedeutet, worin R⁹ gleich oder verschieden sind und Wasserstoff und/oder die Bedeutungen R⁵ besitzen können.

Bei den Verbindungen gemäß allgemeiner Formel (III) handelt es sich um Phosphorylpolysulfide und bei den Verbindungen gemäß allgemeiner Formel (IV) um Dithiophosphate.

Folgende Metallkationen kommen für M^{z+} in Frage: Li, Na, K, Rb, Cs, Be, Mg, Ca, Sr, Ba, Al, Nd, Zn, Cd, Ni und Cu. Bevorzugt sind: Na, K, Zn und Cu. Ebenfalls bevorzugt steht M^{z+} für NH₄⁺.

Folgende Metalldithiophosphate sind von besonderem Interesse: 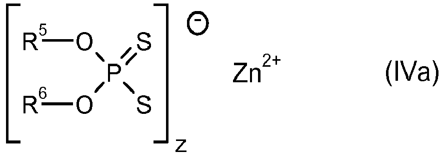 worin
- z: gleich 2 ist

R⁵ und R⁶ gleich oder verschieden sind und Wasserstoff oder eine geradekettige oder verzweigte, substituierte oder unsubstituierte Alkylgruppe oder Cycloalkylgruppe mit 1 bis 12 Kohlenstoffatomen, besonders bevorzugt eine C₂-C₁₂ Alkylgruppe oder eine C₅-C₁₂ Cycloalkylgruppe und insbesondere Ethyl, Propyl, Isopropyl, Butyl, Isobutyl, Cyclohexyl, Ethylhexyl oder Dodecyl bedeuten.

Derartige Verbindungen der allgemeinen Formel (III) oder (IV) können optional auch in geträgerter oder polymergebundener Form eingesetzt werden.

Geeignete Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclo-hexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyldithiocarbamat (ZDBC), Zink-N-ethylphenyl-dithio-carbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methyl-piperazin); Hexamethylendiamincarbamat (HMDAC); Benzothiazyl-2-tert.-butylsulfenamid (TOBS), N,N'-Diethylthiocarbamyl-N'-cyclohexyl-sulfenamid (DETCS), N-Oxidiethylendithio-carbamyl-N'-oxydiethylensulfenamid (OTOS), 4,4'-Dihydroxydiphenylsulfon (Bisphenol S), Znisopropyl-xanthogenat (ZIX), Selen-, Tellur-, Blei-, Kupfer- und Erdalkalisalze von Dithiocarbaminsäuren; Pentamethylenammonium-N-pentamethylendithiocarbamat; Cyclohexylethylamin; Dibutylamin; Poly-ethylenpolyamine, Polyethylenpolyimine wie z. B. Triethylentetramin (TETA), Phosphorylpolysulfide wie z. B. : 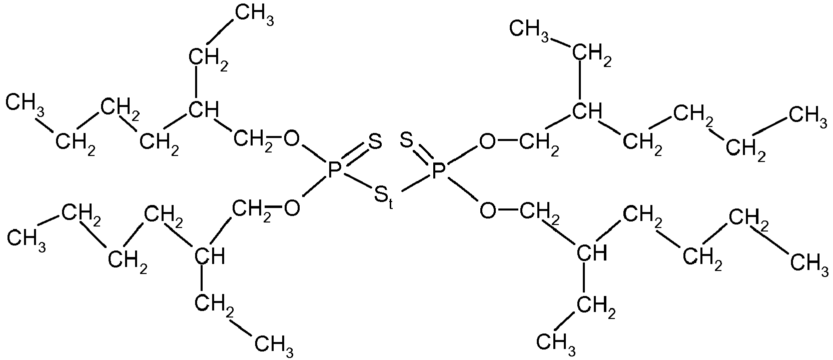 mit t = 2 bis 4, **(Rhenocure® SDT/S** gebunden an 30 Gew.-% hochaktive Kieselsäure der Rhein Chemie Rheinau GmbH) und Zinkdithiophosphate, wie z. B. **Rhenocure® ZDT/G** gebunden an 30 Gew.-% hochaktive Kieselsäure und 20 Gew.-% Polymerbinder der Rhein Chemie Rheinau GmbH mit der Formel 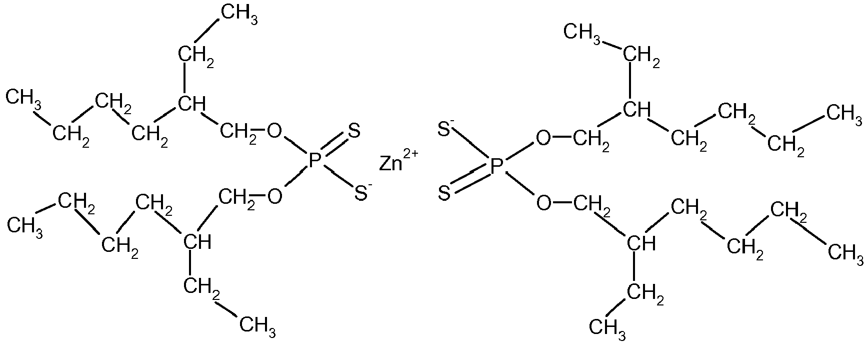 handeln.

Die Vulkanisationsbeschleuniger werden bevorzugt in einer Menge im Bereich von 0,1 bis 15 Gew.-Teilen, bevorzugt 0,1-10 Gew.-Teilen, bezogen auf 100 Gew.-Teile ölfreier Gesamtkautschuk eingesetzt.

In der erfindungsgemäßen Mischung kann ferner Zinkoxid als Aktivator für die Schwefelvulkanisation enthalten sein. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit Die erfindungsgemäße Kautschukzusammensetzung enthält ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion von Zinkoxid und der Vulkanisationsbeschleuniger führt. Ferner kommt es zu einer Komplexbildung mit Zinkionen im Rahmen der Schwefelvulkanisation.

Zinkoxid wird in der erfindungsgemäßen Zusammensetzung üblicherweise in einer Menge von 0,5 bis 15 Gew.-Teilen, bevorzugt 1 bis 7,5 Gew.-Teilen, besonders bevorzugt 1 bis 5 Gew.%, bezogen auf 100 Gew.-Teile ölfreier Gesamtkautschuk eingesetzt.

Stearinsäure wird vorzugsweise in der erfindungsgemäßen Zusammensetzung in einer Menge von 0,1 bis 7, bevorzugt 0,25 bis 7 Gew.-Teilen, bevorzugt 0,5 bis 5 Gew.-Teilen, bezogen auf 100 Gew.-Teile ölfreier Gesamtkautschuk eingesetzt.

Alternativ oder aber auch zusätzlich zur Kombination aus Zinkoxid und Stearinsäure kann Zinkstearat eingesetzt werden. In diesem Fall wird üblicherweise eine Menge von 0,25 bis 5 Gew.-Teilen, bevorzugt 1 bis 3 Gew.-Teile, jeweils bezogen auf 100 Gew.-Teile ölfreier Gesamtkautschuk verwendet.

Weitere optional als Komponente(n) g) der erfindungsgemäßen Kautschukmischungen zuzusetzende Kautschukadditive umfassen Alterungsschutzmittel, Reversionsschutzmittel, Lichtschutzmittel, Ozonschutzmittel, Wachse, Mineralöl, Verarbeitungshilfsmittel, Weichmacher, Mineralöle, Tackifier, Treibmittel, Farbstoffe, Pigmente, Harze, Streckmittel, organische Säuren, Vulkanisationsverzögerer, Metalloxide sowie weitere Füllstoffaktivatoren, wie beispielsweise Triethanolamin, Trimethylolpropan, Polyethylenglykol, Hexantriol oder andere Additive, wie etwa Ruß, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als Vulkanisationsverzögerer können den erfindungsgemäßen Zusammensetzungen beispielsweise Sulfonamide, Sulfanilide oder Phthalimide zugesetzt werden. Geeignet sind z.B. N-Trichlormethylsulfenylbenzolsulfanilid, N-Cyclohexylthiophthalimid, Phtalsäureanhydrid (PTA), Salicylsäure (SAL), N-Nitrosodiphenylamin (NDPA), Trichlormelamin (TCM), Maleinsäureanhydrid (MSA) und N-Trichlormethylsulfenylbenzolsulfanilid (letzteres kommerziell unter der Bezeichnung Vulkalent® E erhältlich). Entsprechende Vulkanisationsverzögerer sind ebenfalls in J. Schnetger, "Lexikon der Kautschuktechnik", 3. Auflage, Hüthig Verlag, Heidelberg, 2004, Seite 590 erwähnt.

Als Antioxidantien können den erfindungsgemäßen Zusammensetzungen beispielsweise Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), 2,2,4-Trimethyl-1,2-dihydrochinlin (TMQ), Nickel-dibutyldithiocarbamat (NDBC), 2,6-Di-tert.-butyl-p-kresol (BHT) und 2,2'-Methylen-bis(4-methyl-6tert.butyl-phenol) (BKF) eingesetzt werden. Diese Antioxidantien können auch in nicht-staubenden, insbesondere auch polymergebundenen Lieferformen eingesetzt werden (als "Microgranulat" (MG) oder "Microgranulat coated" (MGC)).

Darüber hinaus sind auch Alterungsschutzmittel einsetzbar, beispielsweise in Form verfärbender Alterungsschutzmittel mit Ermüdungs- und Ozonschutzwirkung, z.B. N-Isopropyl-N'-phenyl-p-phenylen-diamin (IPPD); N-1,3-Dimethylbutyl-N'-phenyl-p-phenylendiamin (6PPD), N-1,4-Dimethylpentyl-N'-phenyl-p-phenylendiamin (7PPD), NN'-bis-(1,4-Dimethylpentyl)-p-phenylendiamin (77PD) etc., verfärbender Alterungsschutzmittel mit Ermüdungsschutz, aber ohne Ozonschutzwirkung, z.B. Phenyl-α-naphthylamin (PAN); verfärbender Alterungsschutzmittel mit geringer Ermüdungs- und ohne Ozonschutzwirkung, z.B. octyliertes Diphenylamin (ODPA); nicht verfärbender Alterungsschutzmittel mit Ermüdungsschutz und gutem Hitzeschutz, z.B. styrolisierte Phenole (SPH); nicht verfärbender Ozonschutzmittel ohne Alterungsschutzwirkung, z.B. Wachse (Gemische aus speziellen Kohlenwasserstoffen), cyclische Acetale und Enolether; sowie Hydrolyseschutzmittel wie z.B. Polycarbodiimide.

Ferner können den erfindungsgemäßen Kautschukzusammensetzungen auch Mastikationschemikalien zugesetzt werden, welche vorzugsweise ausgewählt werden aus der Gruppe bestehend aus Thiophenolen, Thiophenolzinksalzen, substituierten aromatischen Disulfiden, Derivaten von Thiocarbonsäuren, Hydrazinderivaten, Nitrosoverbindungen und Metallkomplexen, besonders bevorzugt Eisenhemiporphyrazin, Eisenphthalocyanin, Eisenacetonylacetat und dessen Zn-Salz. Die Mastikationschemikalien werden insbesondere zur Mastikation des in der Mischung verwendeten Naturkautschuks verwendet, wobei die Mastikation des Naturkautschuks vorzugsweise in einem separaten Verfahrensschritt vor der eigentlichen Mischungsherstellung durchgeführt wird.

Erfindungsgemäß ist es gleichwohl möglich, zusätzlich zu dem hellen Füllstoff ein gewisse Menge Ruß zu verwenden, insbesondere Ruße vom Typ HAF, ISAF und SAF, die üblicherweise in Luftreifen und insbesondere in den Laufstreifen von Luftreifen eingesetzt werden. Als Beispiele für diese Ruße können N110, N 115, N220, N134, N234, N339, N347 und N375 genannt werden, die dem Fachmann hinreichend bekannt und von diversen Herstellern käuflich erhältlich sind.

Wird Ruß zugesetzt, so beträgt der Anteil des hellen verstärkenden Füllstoffs jedoch mehr als 50 Gew.-%, vorzugsweise mehr als 75 Gew.-%, bezogen auf die Gesamtmenge der verwendeten verstärkenden Füllstoffe. Der Anteil von Ruß ist dann weniger als 50 Gew.-% und bevorzugter weniger als 40 Gew.-%. In einer bevorzugten Ausführungsform wird in der erfindungsgemäßen Kautschukzusammensetzungen Ruß in Mengen von 2 bis 25 Gew.-Teilen, bevorzugt 5 - 10 Gew.-Teilen, bezogen auf 100 Gew.-Teilen ölfreier Gesamtkautschuk zugesetzt.

Die als Komponente(n) g) verwendbaren Kautschukadditive werden in üblichen Mengen, die sich u. a. nach dem Verwendungszweck richten, eingesetzt. Übliche Mengen für einzelne Kautschukadditive liegen beispielsweise bei 0,1 bis 50 phr, wobei Öl, das als Verstreckungsmittel von Kautschuken in die Kautschukzusammensetzungen eingebracht wird, bei dieser Mengenangabe unberücksichtigt bleibt.

Ein weiterer Gegenstand der Erfindung ist die Herstellung der erfindungsgemäßen Kautschukzusammensetzung. Diese erfolgt vorzugsweise durch Mischen der Komponenten a) bis g) Das Mischen kann in einer oder bis zu 6 Stufen erfolgen. Bewährt hat sich ein dreistufiger Mischprozess mit zwei Mischstufen im Innenmischer und einer abschließenden Mischstufe auf einer Walze (sogenannte "Fertigmischstufe"). Möglich ist auch ein zweistufiger Mischprozess, wobei die 1. Mischstufe im Innenmischer und die 2. Mischstufe auf einer Walze erfolgt. Ferner ist ein 2stufiger Mischprozess möglich, bei dem beide Mischstufen ein einem Innenmischer erfolgen, wobei die Mischung vor der Zugabe der Komponenten, die üblicherweise auf der Walze zugegeben werden, auf Temperaturen < 120°C, vorzugsweise <110°C abgekühlt wird.

Geeignete Aggregate für die Herstellung der erfindungsgemäßen Kautschukzusammensetzungen sind an sich bekannt und schließen beispielsweise Walzen, Innenmischer oder auch Mischextruder ein.

Bei Anwendung eines 2stufigen Mischverfahrens im Innenmischer oder eines drei- oder mehrstufigen Mischverfahrens wird in der ersten und/oder in der zweiten sowie späteren Mischstufen, vorzugsweise in der ersten und zweiten Mischstufe bei Temperaturen von 60°C bis 180 °C, vorzugsweise 120°C bis 175°C, besonders bevorzugt 125°C bis 170°C gearbeitet, wobei die Mischzeiten bei diesen Temperaturen im Bereich von 1 bis 15 Minuten liegen und so gewählt werden, dass nicht bereits ein Vulkanisationsstart (Anvulkanisation oder Scorch) erfolgt. Die Anfangstemperatur beträgt vorzugsweise 60°C.

Die Temperaturen in der Fertigmischstufe betragen 20 bis 120°C, vorzugsweise 30 bis 110 °C.

Üblicherweise erfolgt das Mischen im Innenmischer in einem Temperaturbereich von 20 bis 180°C, bevorzugt im Temperaturbereich 50 bis 170 °C oder auf einer Walze bei weniger als 110 °C. Die Wahl einer geeigneten Temperatur kann der Fachmann gemäß seiner Fachkenntnisse vornehmen, zu beachten ist, dass es beim Mischen einerseits zu einer Silanisierung der Kieselsäure und andrerseits nicht bereits zu einer verfrühten Vulkanisation kommt (Scorching).

Die Vulkanisation der erfindungsgemäßen Zusammensetzungen erfolgt üblicherweise bei einer Temperatur im Bereich von 100 bis 250°C, bevorzugt von 130 bis 180°C, entweder unter Normaldruck (1 bar) oder optional unter einem Druck von bis zu 200 bar. Die Vernetzung findet im Rahmen eines Formgebungsprozesses statt.

Die erfindungsgemäß hergestellten Kautschukzusammensetzungen eignen sich zur Herstellung von Vulkanisaten und zur Herstellung von Luftreifen, Winterreifen, Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.

Nachfolgend werden anhand von Beispielen die erfindungsgemäßen Kautschukzusammensetzungen näher erläutert:

### Beispiele:

### I. Kautschuke

Für die erfindungsgemäßen Kautschukzusammensetzungen wurden verschiedene Polybutadiene und SSBR eingesetzt. Alle Polybutadiene und SSBR sind Produkte der Lanxess Deutschland GmbH.

**Tab. 1** zeigt die eingesetzten Polybutadiene, wobei es sich bei den Buna PBR 4065 und Buna PBR 4076 um modifizierte Polybutadiene handelt. Weiterhin sind darin die wichtigen Eigenschaften zusammengefasst.

**Tab.1:**

| | | | **ML 1+4** | **MSR** | **SV** | **Branching Index** | **Mn** | **Mw** | **PDI** |
|---|---|---|---|---|---|---|---|---|---|
| | | Modification | MU | MU/s | mPas | ML/SV*10 | kg/mol | kg/mol | |
| **Buna CB 1203** | CoBR | no | 43 | 0,41 | 145 | 3,0 | 145 | 395 | 2,7 |
| **Buna CB 24** | NdBR | no | 43 | 0,68 | 230 | 1,9 | 205 | 420 | 2,0 |
| **Buna CB 22** | NdBR | no | 63 | 0,74 | 350 | 1.8 | 238 | 466 | 2,0 |
| **Buna PBR 4065** | NdBR | yes | 44 | 0,45 | 150 | 2,9 | 171 | 375 | 2,2 |
| **Buna PBR 4076** | NdBR | yes | 63 | 0,45 | 280 | 2,3 | 212 | 462 | 2,2 |

**Tab. 2** zeigt die eingesetzten SSBR, wobei es sich bei den PBR 4078 und PBR 4070 um endgruppenfunktionalisierte SSBR handelt. PBR 4088 stellt ein in der Polymerkette funktionalisiertes SSBR dar. VSL 5025-2 ist nicht funktionalisiert. Weiterhin sind darin die wichtigen Eigenschaften zusammengefasst.

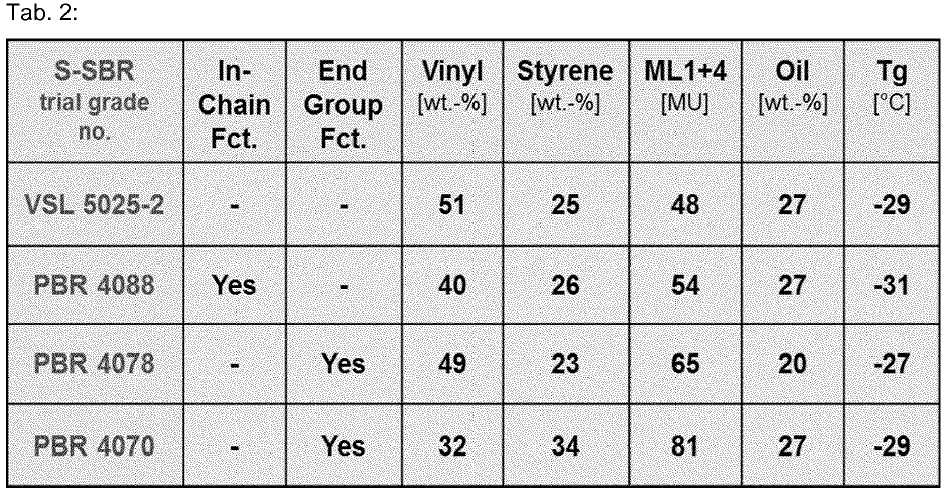

### II. Rezepturen

Für die Mischungsstudien wurden folgende Substanzen eingesetzt:

**Tab. 3:**

| Handelsname | Hersteller |
|---|---|
| VULCAN J/N375 als Ruß | Cabot Corporation |
| TDAE oil, Öl | Hansen und Rosenthal KG |
| ZINKWEISS ROTSIEGEL als Zinkoxid | Grillo Zinkoxid GmbH |
| EDENOR C 18 98-100 als Stearinsäure | Caldic Deutschland GmbH |
| VULKANOX 4020/LG als Stabilisator | Lanxess Deutschland GmbH |
| VULKANOX HS/LG als Stabilisator | Lanxess Deutschland GmbH |
| VULKACIT^{®} NZ/EGC als Beschleuniger | Lanxess Deutschland GmbH |
| MAHLSCHWEFEL 90/95 CHANCEL, Schwefel | Solvay Barium Strontium |
| ANTI LUX 654 , Wachs | RheinChemie Rheinau GmbH |
| Si 69 , Silan | Evonic Degussa GmbH |
| RHENOGRAN DPG-(80), Diphenylguanidine | RheinChemie Rheinau GmbH |
| VULKALENT E/C , Sulfonamid | Lanxess Deutschland GmbH |
| ULTRASIL 7000 GR, Silica | Evonic Degussa GmbH |

**Tab. 4** führt die Rezepturen der erfindungsgemäßen Kautschukzusammensetzungen auf. Die Angaben der Bestandteile der Kautschukzusammensetzungen sind in phr (Gewichtsteile pro 100 Gewichtsteile Gesamtkautschuk).

Für "S-SBR" sind die SSBRs aus Tab. 2 und für "High-cis NdBR" sind die Polybutadiene aus Tab. 1 einzusetzen.

**Tab. 4:**

| | |
|---|---|
| S-SBR [oil content subtracted] | 70 |
| High-cis NdBR | 30 |
| Silica (ULTRASIL 7000 GR) | 90 |
| Carbon black (VULCAN J/N375) | 7 |
| TDAE oil [free oil + oil from SSBR] | 36.3 |
| Processing aid (AFLUX 37; GE 1837) | 3 |
| Stearic acid (EDENOR C 18 98-100) | 1 |
| Antioxidant (VULKANOX 4020/LG) | 2 |
| Antioxidant (VULKANOX HS/LG) | 2 |
| Zinc oxide (ZINKWEISS ROTSIEGEL) | 3 |
| Wax (ANTILUX 654) | 2 |
| Silane (SI 69) | 7.2 |
| Sulphur (MAHLSCHWEFEL 90/95 CHANCEL) | 1.6 |
| Diphenylguanidine (RHENOGRAN DPG-80) | 2.75 |
| Benzothiazolesulfenamide (VULKACIT NZ/EGC) | 1.6 |
| Sulfonamide (VULKALENT E/C) | 0.2 |

### III. Herstellung der Vulkanisate

Zur Herstellung der Vulkanisate wurden die Bestandteile wie folgt zugemischt und behandelt:

### Silica Mixing Cycle

**1st Stage of Mixing : 1.5 ltr Interlocker**, **60rpm, start at 60C**
   0 - add all polymers
   30 seconds - Add 2/3 silica, 2/3 silane + Stearic Acid and waxes, AO's
   90 seconds - Add remaining silica and silane
   150 seconds - Add ZnO
   210 seconds - Sweep
   240 seconds Temperature at 150C and hold for 3 minutes
   420 seconds - Dump
   Sheet out the batch and allow to cool and stand for a minimum of 8.0 hours before use again.
2**nd Stage of Mixing** : **1.5** l**tr Interlocker, 60 rpm and 60C**
   0 - add 1st stage masterbatch
   Take up to 150C and hold for 3 minutes
   Dump after 3 minutes at 150C = total cycle time of 5minutes
**3rd Stage of Mixing** :
   Add curatives on two roll mill (Iab) or in 3rd stage mixing step dumping no higher than 110C.

### IV. Die Vulkanisateigenschaften der Mischungen sind aus Tab. 5 ersichtlich:

**Tab. 5: Vulkanisateigenschaften der Mischungen**

| | 1 | 2 | 3 | 4 | 5 | 6 | 7 | 8 | 9 | 10 |
|---|---|---|---|---|---|---|---|---|---|---|
| SSBR Type | VSL 5025-2 | VSL 5025-2 | PBR 4088 | PBR 4088 | PBR 4070 | PBR 4070 | PBR 4078 | PBR 4078 | VSL 5025-0HM | VSL 5025-0HM |
| NdBR Type | CB 24 | PBR 4065 | CB 24 | PBR 4065 | CB 24 | PBR 4065 | CB 24 | PBR 4065 | CB 22 | PBR 4076 |
| | | | | | | | | | | |
| Hardness Shore A 23C | 63 | 62 | 60 | 60 | 65 | 65 | 61 | 63 | 60 | 60 |
| Hardness Shore A 60C | 60 | 59 | 57 | 55 | | | 57 | 57 | 57 | 57 |
| Rebound 23C (%) | 28 | 28 | 38 | 36 | 28 | 28 | 33 | 32 | 33 | 31 |
| Rebound 60C (%) | 52 | 53 | 61 | 60 | 54 | 54 | 58 | 56 | 51 | 53 |
| G*(15%) @ 60C (MPa) | 1,07 | 1,09 | 0,94 | 0,94 | 1,27 | 1,24 | 1,17 | 1,05 | 1,11 | 1,06 |
| Tangent Delta Maximum 60C | 0,166 | 0,17 | 0,131 | 0,136 | 0,171 | 0,172 | 0,157 | 0,15 | 0,172 | 0,172 |
| Explexor tangent delta 60C | 0,105 | 0,111 | 0,079 | 0,087 | 0,096 | 0,095 | 0,092 | 0,096 | 0,116 | 0,104 |
| Modulus 300% (MPa) | 12,8 | 11,8 | 14,6 | 13,5 | 13,7 | 13,8 | 11,8 | 10,6 | 11,4 | 11,8 |
| | | | | | | | | | | |
| Mooney Viscosity ML 1+4 @ 100C | 66 | 58 | 68 | 64 | 87 | 81 | 75 | 69 | 73 | 66 |

Es zeigt sich, dass die dynamischen Eigenschaften der Vulkanisate mit PBR 4065 bzw. PBR 4076 und Vulkanisate mit CB 24 bzw. CB 22 annähernd gleich geblieben sind. Lediglich die Mooney Viskosität sind bei den Kautschukzusammensetzungen mit modifizierten Polybutadienen niedriger.

**Tab. 7: Steifigkeitsindex (SI) und Rollwiderstandsindex (RRI)**

| | Mischungen/Vulkanisat | Stiffness Index | Rolling Resistance Index |
|---|---|---|---|
| 1 | 5025/CB24 | 100 | 100 |
| 2 | 5025/PBR 4065 | 92 | 94 |
| 3 | PBR 4088 / CB 24 | 95 | 198 |
| 4 | PBR 4088 / PBR 4065 | 88 | 170 |
| 5 | PBR 4070 / CB24 | 131 | 110 |
| 6 | PBR 4070 / PBR 4065 | 129 | 111 |
| 7 | PBR 4078 / CB 24 | 98 | 135 |
| 8 | PBR 4078 / PBR 4065 | 81 | 130 |
| 9 | 5025-0HM / CB 22 | 88 | 86 |
| 10 | 5025-0HM / PBR 4076 | 87 | 99 |

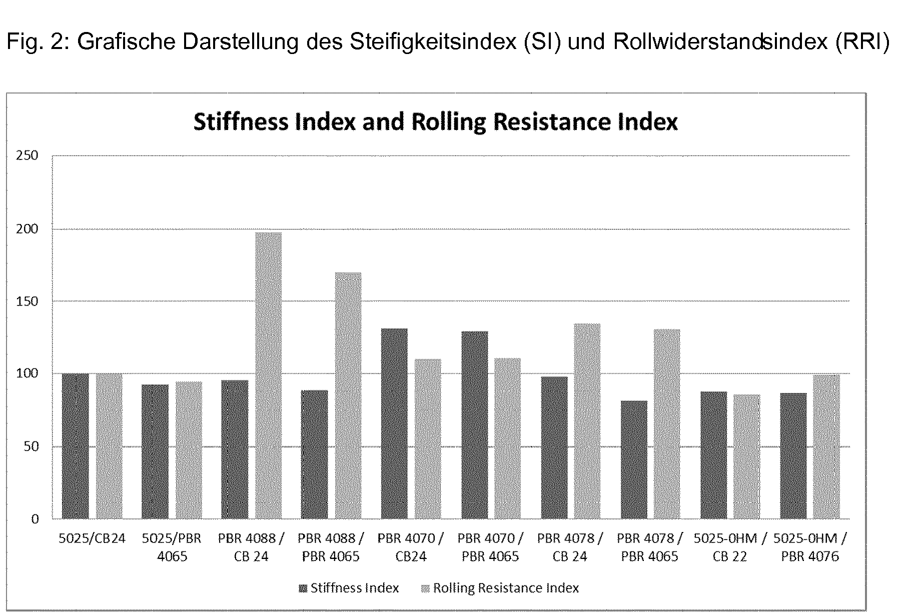

Der Steifigkeitsindex und der Rollwiderstandsindex (RRI) werden rechnerisch ermittelt: SI = Shore A Härte 23°C x Zugfestigkeit S300 x G*15%@60°C (MPa)
RRI = Rückprallelastizität @60°C / Tan delta max @ 60°C / tan delta @ 60°C Eplexor Hierbei wird die Mischung 1 bestehend aus VSL 5025-2 und CB 24 auf 100 normiert, da weder das SSBR noch das Polybutadien funktionalisiert bzw. modifiziert ist.

Aus Tab. 7 und Fig. 2 kann festgestellt werden, dass die Vulkanisate mit modifizierten Polybutadienen 2, 4, 6, 8, 10 immer niedrigere Steifigkeitsindices und niedrigere Rollwiderstandsindices aufweisen als die Vulkanisate ohne modifiziertes Polybutadien 1, 3, 5, 7, 9. Somit weisen die erfindungsgemäßen Vulkanisaten nicht nur ein verbessertes Verarbeitungsverhalten (Steifigkeitsindex), sondern auch einen verbesserten Rollwiderstand auf.

### Vulkanisatsprüfungen

An den Vulkanisaten wurden folgende Eigenschaften nach den genannten Normen bestimmt:
Mooneyviskosität und Mooney-Stress-Relaxation nach ASTM D1646-00 (für Kautschukzusammensetzung)

| | |
|---|---|
| DIN 53505: | Shore A-Härte bei 60°C |
| DIN 53512: | Rückprallelastizität bei 60°C |
| DIN 53504: | Spannungswerte bei 10%, 100%, und 300 % Dehnung (σ₁₀, σ₁₀₀, und σ₃₀₀), Zugfestigkeit sowie Bruchdehnung |
| DIN 53516: | Abrieb |

Für die Bestimmung der dynamischen Eigenschaften (Temperaturabhängigkeit des Speichermoduls E' im Temperaturbereich -60°C bis 0°C sowie tan δ bei 60°C) wurde ein Eplexor-Gerät (Eplexor 500 N) der Firma Gabo-Testanlagen GmbH, Ahlden, Deutschland eingesetzt. Die Messungen wurden nach DIN53513 bei 10 Hz an Aresstreifen im Temperaturbereich -100°C und +100°C bei einer Heizrate von 1 K/min. ermittelt.

Mit der Methode wurden folgende Messgrößen erhalten, die nach ASTM 5992-96 bezeichnet werden:

| | |
|---|---|
| E' (60°C): | Speichermodul bei 60°C |
| E' (23°C): | Speichermodul bei 23°C |
| E' (0°C): | Speichermodul bei 0°C |

sowie

| | |
|---|---|
| tan δ (60°C): | Verlustfaktor (E"/E') bei 60°C. |
| tan δ (23°C): | Verlustfaktor (E"/E') bei 23°C. |
| tan δ (0°C): | Verlustfaktor (E"/E') bei 0°C. |

E' liefert ein Indiz für den Griff der Reifen-Lauffläche. Je niedriger E' ist, umso besser ist der Griff.

Tan δ (60°C) ist ein Maß für den Hystereseverlust beim Rollen des Reifens. Je niedriger tan δ (60°C) ist, umso niedriger ist der Rollwiderstand des Reifens.

DIN53513-1990: Elastisches Eigenschaften - Für die Bestimmung der elastischen Eigenschaften wurde ein MTS-Elastomer Test System (MTS Flex Test) der Firma MTS eingesetzt. Die Messungen wurden nach DIN53513-1990 an Cylinderproben (2 Proben mit je 20 x 6 mm) mit gesamt 2 mm Kompression bei einer Temperatur von 60°C und einer Messfrequenz von 1 Hz im Bereich des Amplitudensweeps von 0,1 bis 40% ermittelt

Mit der Methode wurden folgende Messgrößen erhalten, die nach ASTM 5992-96 bezeichnet werden:

| | |
|---|---|
| G* (0,5%): | dynamischer Modul bei 0,5% Amplitudensweep |
| G* (15%): | dynamischer Modul bei 15% Amplitudensweep |
| G* (0,5%) - (15%): | Differenz des dynamischer Moduls bei 0,5% zu 15 % Amplitudensweep |

sowie
tan δ (max): maximaler Verlustfaktor (G"/G') der gesamten Messbereiches bei 60°C.
G* (0,5%) - (15%) liefert ein Indiz für den Payne-Effekt der Mischung, wobei ein neidriger Wert eine gute Füllstoffverteilung und damit einen neidrigen Rollwiderstand indiziert.
Tan δ (max) ist ein Maß für den Hystereseverlust beim Rollen des Reifens. Je niedriger tan δ (max) ist, umso niedriger ist der Rollwiderstand des Reifens.

### V. Oberflächeneigenschaften von Extrudaten

Des Weiteren wurde verschiedene Extrudate mittels eines Extruders (Brabender Plasticorders) bei 90°C, 100°C und 120°C bei einer Schneckengeschwindigkeit von 50 upm (Umdrehung pro Minute) gemäß ASTM D 2230 hergestellt. Je glatter die Ränder und Ecken des Extrudates ist, desto einfacher ist die Verarbeitbarkeit der Kautschukzusammensetzung.

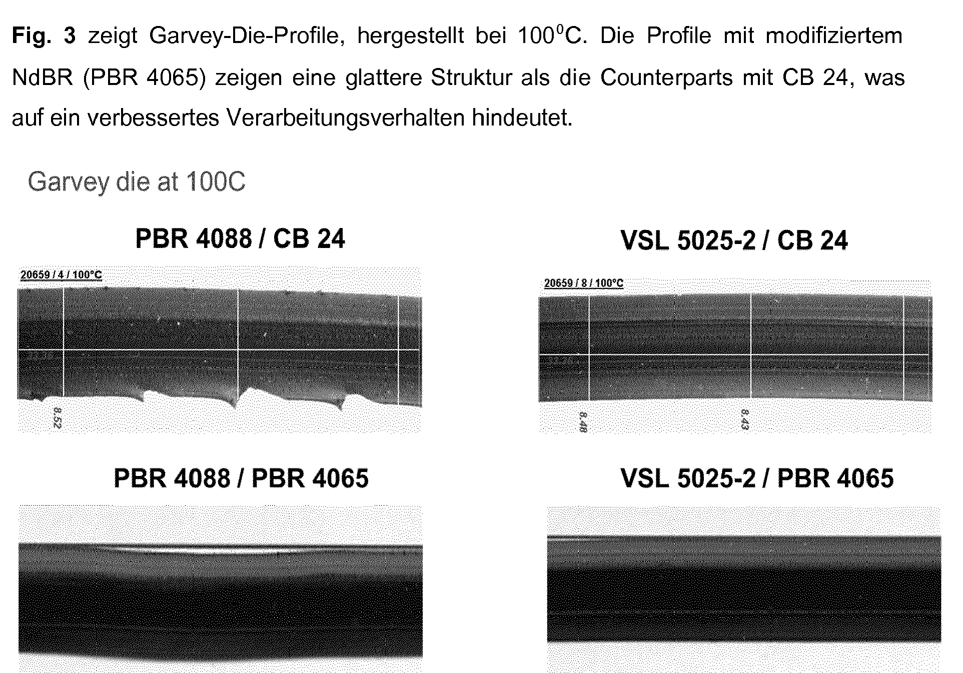

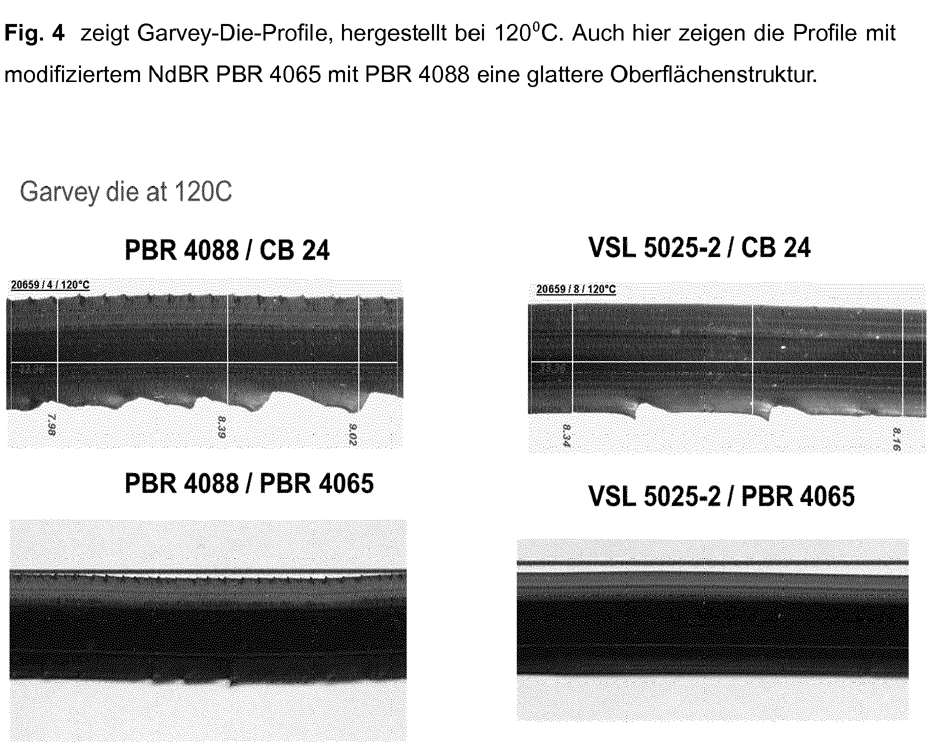

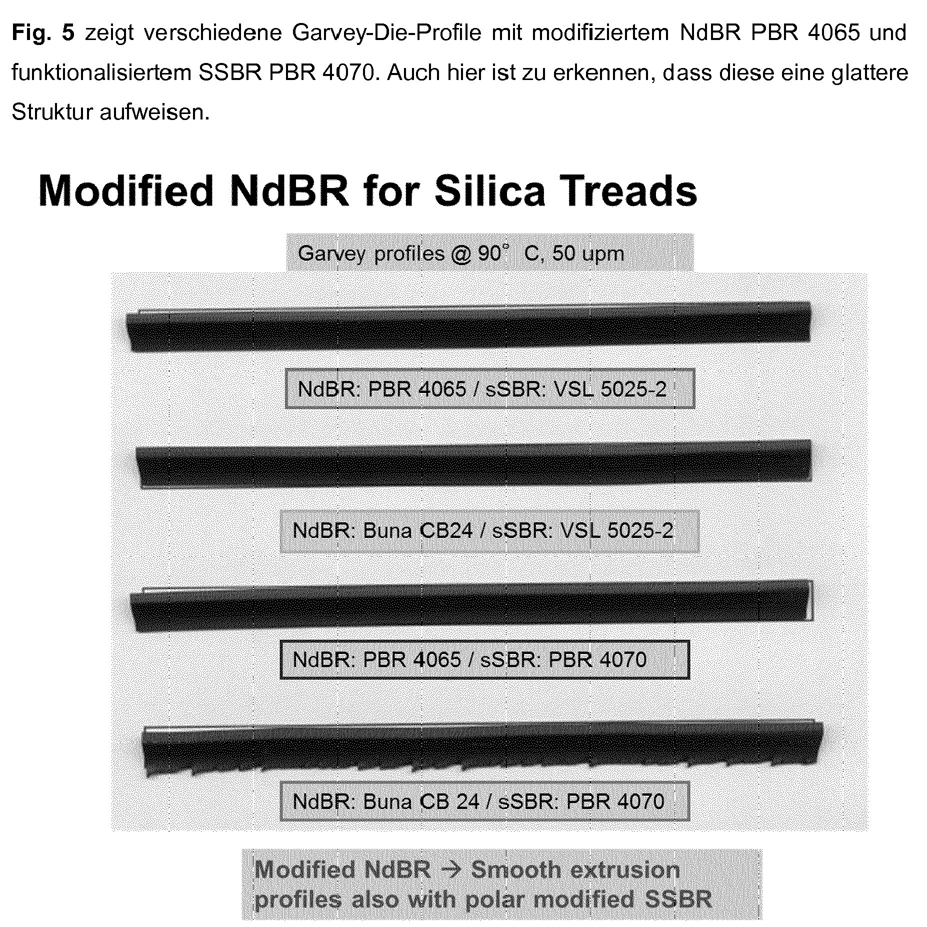

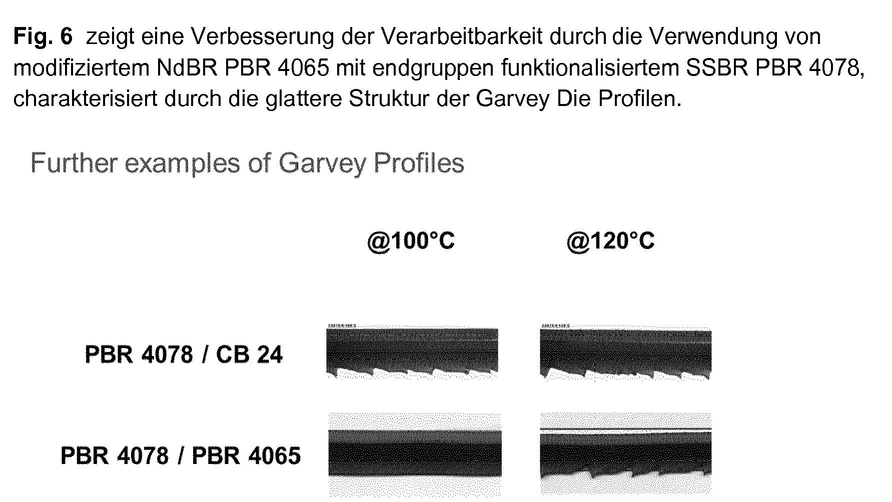

## Patentansprüche

1. Vulkanisierbare Kautschukzusammensetzung enthaltend mindestens folgende Komponenten:
a) mindestens ein funktionalisiertes Polymer,
b) mindestens ein modifiziertes Polybutadien mit einem Anteil an cis-1,4-Einheiten von > 95 Gew.-% und einem Anteil an 1,2-Vinyl-Gehalt von < 1 Gew.- %, wobei das Polybutadien nach der Polymerisation mittels Schwefelchloride modifiziert ist.
c) mindestens eine Kieselsäure
d) mindestens einen weiteren Füllstoff,
e) mindestens ein Vulkanisationsmittel,
f) mindestens ein Öl,
g) ggf. mindestens einen Kautschukadditiv.

2. Vulkanisierbare Kautschukzusammensetzung nach Anspruch 1, **dadurch gekennzeichnet, dass** es sich bei dem funktionalisierten Polymer um funktionalisierte Dienpolymere oder durch Copolymerisation von Dienen mit vinylaromatischen Monomeren erhältliche Dien-Copolymer handelt.

3. Vulkanisierbare Kautschukzusammensetzung nach Anspruch 1, **dadurch gekennzeichnet, dass** das funktionalisierte Polymer ein Polybutadien, ein Polyisopren, ein Butadien-Isopren-Copolymer, ein Butadien-Styrol-Copolymer, ein Isopren-Styrol-Copolymer oder ein Butadien-Isopren-Styrol-Terpolymer ist.

4. Vulkanisierbare Kautschukzusammensetzung nach Anspruch 1, **dadurch gekennzeichnet, dass** es sich bei dem funktionalisierten Polymer um durch Lösungspolymerisation hergestellte endgruppenfunktionalisierte Butadien-Styrol-Copolymere handelt.

5. Vulkanisierbare Kautschukzusammensetzung nach Anspruch 4, **dadurch gekennzeichnet, dass** das endgruppenfunktionalisierte Butadien-Styrol-Copolymer Mooney-Viskositäten (ML 1+4 (100°C)) von 10 bis 200, vorzugsweise 30 bis 150 Mooney-Einheiten aufweist.

6. Vulkanisierbare Kautschukzusammensetzung nach Anspruch 5, **dadurch gekennzeichnet, dass** das endgruppenfunktionalisierte Butadien-Styrol-Copolymer mittlere Molgewichte (Zahlenmittel, Mₙ) von 10.000 bis 2.000.000 g/mol, bevorzugt von 100.000 bis 1.000.000 g/mol aufweist.

7. Vulkanisierbare Kautschukzusammensetzung nach Anspruch 6, **dadurch gekennzeichnet, dass** das endgruppenfunktionalisierte Butadien-Styrol-Copolymer Glasübergangstemperaturen von -110°C bis +20°C, bevorzugt - 110°C bis 0°C aufweist.

8. Vulkanisierbare Kautschukzusammensetzung nach Anspruch 7, **dadurch gekennzeichnet, dass** das modifizierte Polybutadien durch Lösungspolymerisation in Gegenwart mindestens eines inerten, organischen Lösungsmittels und in Gegenwart von mindestens einem Katalysator auf Basis von Neodymverbindungen in einem Temperaturbereich von -20°C bis 150°C polymerisiert, die Polymerisation durch Zugabe von protischen Verbindungen gestoppt und das Polymerisat mittels Schwefelchloriden modifiziert wird.

9. Vulkanisierbare Kautschukzusammensetzung nach Anspruch 8, **dadurch gekennzeichnet, dass** die Schwefelchloride vor der Zugabe mit einer Carbonsäure, Fettsäure und/oder Fettsäureester behandelt werden.

10. Vulkanisierbare Kautschukzusammensetzung nach Anspruch 9, **dadurch gekennzeichnet, dass** es sich bei den Schwefelchloriden um Dischwefeldichlorid, Schwefelchlorid, Schwefelbromid, Schwefeldichlorid, Thionylchlorid, Dischwefeldibromid und/oder Thionylbromid handelt.

11. Vulkanisierbare Kautschukzusammensetzung nach Anspruch 10, **dadurch gekennzeichnet, dass** das modifizierte Polybutadien eine sprungartige Erhöhung der Mooney-Viskosität (ML 1+4 bei 100 °C) um mindestens 50%, bezogen auf die Mooney-Viskosität (ML 1+4 bei 100 °C) des Polybutadiens nach Zugabe der Schwefelchloride, aufweist.

12. Vulkanisierbare Kautschukzusammensetzung nach Anspruch 11, **dadurch gekennzeichnet, dass** das modifizierte Polybutadien nach der Polymerisation eine Mooney-Viskosität (ML 1+4 bei 100 °C) (Ausgangsmooney-Viskosität) von mindestens 20 MU, bevorzugt 20 - 25 MU, besonders bevorzugt mindestens 40 MU aufweist und nach der Zugabe von Schwefelchloriden eine Mooney-Viskosität (ML 1+4 bei 100 °C) (Endmooney-Viskosität) von mindestens 30 MU, bevorzugt 40 - 50 MU, besonders bevorzugt 60 -80 MU aufweist, wobei der Gelgehalt kleiner als 1 Gew.-% beträgt.

13. Vulkanisierbare Kautschukzusammensetzung nach einem der vorgenannten Ansprüche 1 - 12 enthaltend
a) 50 bis 90 Gew.-Teile, vorzugsweise 60 bis 70 Gew.-Teile von mindestens einem funktionalisierten Lösungs-Butadien-Styrol-Copolymer (SSBR) (ölfrei) mit einer Glasübergangstemperatur (Tg) zwischen -110°C bis +20°C bezogen auf das ölfreie SSBR,
b) 10 - 50 Gew.-Teile, vorzugsweise 20 bis 40 Gew.-Teile von mindestens einem modifizierten Neodymkatalysierten Polybutadien (NdBR) mit einer Mooneyviskosität (ML 1+4 bei 100 °C) von mindestens 30 MU,
c) 50 - 120 Gew.-Teile, vorzugsweise 60 - 100 Gew.-Teile von mindestens einer Kieselsäure,
d) 2 - 25 Gew.-Teile, vorzugsweise 5 - 10 Gew.-Teile von mindestens einem weiteren Füllstoff,
e) 1 - 5 Gew.-Teile, vorzugsweise 2 - 4 Gew.-Teile von mindestens einem Vulkanisationsmittel,
f) 5 - 50 Gew.-Teile, vorzugsweise 10 - 40 Gew.Teile von mindestens einem Öl,
g) Ggf. 1 - 7 Gew.-Teile, vorzugsweise 2 - 5 Gew.-Teile von mindestens einem Kautschukadditiv,
bezogen auf 100 Gewichtsteile Kautschuk (Summe aus a) und b)).

14. Vulkanisierbare Kautschukzusammensetzung nach Anspruch 13, **dadurch gekennzeichnet, dass** es sich beim dem weiteren Füllstoff um Ruß handelt.

15. Verfahren zur Herstellung von vulkanisierbaren Kautschukzusammensetzung nach einem der Ansprüche 1 bis 14, **dadurch gekennzeichnet, dass** man die Komponenten a.) bis g.) in einer oder mehreren Stufen miteinander mischt, bevorzugt entweder durch einen dreistufigen Mischprozess mit zwei Mischstufen in einem Innenmischer und einer abschließenden Mischstufe auf einer Walze, oder durch einen zweistufigen Mischprozess, bei dem die 1. Mischstufe in einem Innenmischer und die 2. Mischstufe auf einer Walze erfolgt, oder durch einen zweistufigen Mischprozess, bei dem beide Mischstufen in einem Innenmischer erfolgen, wobei die Mischung vor Zugabe derjenigen Komponenten, die bei dreistufigem Mischprozess auf der Walze zugegeben werden, auf Temperaturen < 120°C, vorzugsweise < 110°C abgekühlt wird.

16. Verfahren zur Herstellung von Vulkanisaten, **dadurch gekennzeichnet, dass** man vulkanisierbare Kautschukzusammensetzung nach einem der Ansprüche 1 bis 15 einer Vernetzungsreaktion unterwirft, bevorzugt bei einer Temperatur im Bereich von 100 bis 250°C, insbesondere von 130 bis 180°C, unter einem Druck im Bereich von 1 bis 200 bar.

17. Verfahren nach Anspruch 16, **dadurch gekennzeichnet, dass** die Vernetzung im Rahmen eines Formgebungsprozesses stattfindet.

18. Vulkanisate erhältlich durch das Verfahren nach Anspruch 16 oder 17.

19. Verwendung von vulkanisierbaren Kautschukzusammensetzung nach einem der Ansprüche 1 bis 14 zur Herstellung von Luftreifen, insbesondere Winterreifen, Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.
